# EUROPEAN PATENT APPLICATION

(11) **EP 2 669 547 A1**
(43) Date of publication of application: **04.12.2013**
(21) Application number: 12739599.4
(22) Date of filing: 26.01.2012
(51) Int. Cl.: F16H 3/083, F16H 3/091

(54) **DUAL-CLUTCH TRANSMISSION FOR VEHICLES**

(30) Priority: 28.01.2011 JP 2011016257; 23.01.2012 JP 2012010852
(71) Applicant: Univance Corporation, Kosai-city, Shizuoka 431-0494 (JP)
(72) Inventor: TAKAHASHI, Takasada, Kosai-shi Shizuoka 431-0494 (JP); KOKUBO, Akihiro, Kosai-shi Shizuoka 431-0494 (JP); NISHIYAMA, Yasuyuki, Kosai-shi Shizuoka 431-0494 (JP)
(74) Representative: Thun, Clemens
(86) International application number: PCT/JP2012/051649
(87) International publication number: WO 2012/102337

(57) **Abstract**

A dual-clutch-type vehicle transmission that can reduce the maximum torque transmitting capacity of each of friction clutches by coupling both of a first friction clutch and a second friction clutch upon start of moving is provided.

A first input shaft and a second input shaft; a first friction clutch and a second friction clutch that can transmit motive power from a motive-power source to the first input shaft and the second input shaft; a speed-changing gear mechanism provided with a shared gear that can connect the first input shaft and the second input shaft at the same time, the speed-changing gear mechanism that can connect/disconnect the motive power from the first input shaft and the second input shaft and select a plurality of speed changing levels; and an output shaft that outputs the motive power from the speed-changing gear mechanism are provided. Upon start of moving, a first speed level is selected, both of the first friction clutch and the second friction clutch are coupled, and the motive power from the motive-power source is transmitted to the output shaft via the first friction clutch and the second friction clutch.

## Description

### Technical Field

The present invention relates to a dual-clutch-type vehicle transmission that is provided with two input shafts coupled to a motive-power source via friction clutches and one output shaft engaged with the input shafts via a speed-changing gear mechanism(s) and starts moving while controlling the coupled state of the two friction clutches.

### Background Art

In a conventional dual-clutch-type vehicle transmission, for example, the techniques of Patent Literature 1 have been proposed as a method of reducing speed-changing shock upon start of moving of a vehicle when large torque is input to the transmission.

A twin-clutch-type transmission described in Patent Literature 1 is configured so as to individually control the coupled state of two friction clutches upon start of moving so that the torque transmitting capacity by both of the friction clutches becomes a capacity necessary for starting moving.

### Citation List

### Patent Literature

Patent Literature 1: Japanese Patent Application Laid-Open No. 2007-170640

### Summary of Invention

### Technical Problems

However, in the configuration described in Patent Literature 1, upon start of moving, first, coupling of a first friction clutch which transmits torque to a first speed level of a speed-changing gear mechanism is started; after a predetermined period of time elapses, reduction of a torque transmitting capacity is started before the first friction clutch completes coupling; and, the amount corresponding to the reduction is shared by a second friction clutch which transmits torque to a second speed level; wherein, the sum of the maximum torque transmitting capacities of both of the friction clutches is not effectively used.

Moreover, since both of gear rows of the first speed level and the second speed level having different gear ratios are engaged upon start of moving, it is difficult to control distribution of torque with respect to the friction clutches. Furthermore, upon start of moving, coupling and release of the first friction clutch and coupling of the second friction clutch is carried out while sliding both of the friction clutches; therefore, there are problems such as temporal deterioration in torque transmitting efficiency and excessive wear of clutch plates.

The present invention has been accomplished in order to solve the above described problems, and it is an object to provide a dual-clutch-type vehicle transmission capable of reducing the maximum torque transmitting capacity of each of friction clutches by transmitting torque to a first speed level of a speed-changing gear mechanism by coupling both of a first friction clutch and a second friction clutch upon start of moving.

Moreover, it is another object to provide a dual-clutch-type vehicle transmission which does not deteriorate torque transmitting efficiency and does not excessively wear clutch plates by carrying out coupling without sliding the friction clutches when both of the first friction clutch and the second friction clutch are coupled.

### Disclosure of the Invention

In order to achieve these objects, a dual-clutch-type vehicle transmission according to the present invention is configured in a below manner. First, the present invention is directed to a dual-clutch-type vehicle transmission having: a first input shaft and a second input shaft; a first friction clutch that can transmit motive power from a motive-power source to the first input shaft; a second friction clutch that can transmit the motive power from the motive-power source to the second input shaft; a speed-changing gear mechanism that can select any one level of a plurality of speed changing levels to carry out speed change by connecting/disconnecting the motive power from the first input shaft and the second input shaft; and an output shaft that outputs the motive power from the speed-changing gear mechanism.

Insuchadual-clutch-typevehicletransmission, in the present invention, the speed-changing gear mechanism is provided with a shared gear that can connect the first input shaft and the second input shaft at the same time. The shared gear is characterized by being disposed to be coaxial with the first input shaft and the second input shaft.

Herein, the dual-clutch-type vehicle transmission of the present invention is characterized in that, upon start of moving of a vehicle, in a state that a first speed level is selected by the speed-changing gear mechanism, the first friction clutch and the second friction clutch are coupled at the same time at equal to or higher than a maximum value or an intermediate value of a torque transmitting capacity, and the motive power from the motive-power source can be transmitted to the output shaft via the first friction clutch and the second friction clutch.

Alternatively, the dual-clutch-type vehicle transmission of the present invention is characterized in that, upon start of moving of a vehicle, in a state that a first speed level is selected by the speed-changing gear mechanism, after either one of the first friction clutch and the second friction clutch is coupled, the other one is coupled, and the motive power from the motive-power source can be transmitted to the output shaft.

Moreover, the speed-changing gear mechanism has: a plurality of gear rows that constitute the plurality of speed-changing levels; a first switching clutch that can select any one row of the plurality of gear rows and connect to the first input shaft; and a second switching clutch that can select any one row of the plurality of gear rows and connect to the second input shaft.

Furthermore, the speed-changing gear mechanism may have a first speed-changing gear mechanism that can carry out speed change by selecting any one level of the plurality of speed changing levels including at least a first speed level by the first switching clutch; and a second speed-changing gear mechanism that can carry out speed change by selecting any one level of the plurality of speed changing levels including at least a second speed level by the second switching clutch.

That case is provided with a third switching clutch that can select any one of low speed levels including the first speed level and the second speed level and a high speed level including at least a highest speed level and transmit the motive power to the output shaft, the motive power having undergone speed change by the first speed-changing gear mechanism or the second speed-changing gear mechanism.

### Advantageous Effects of the Invention

According to the present invention, upon start of moving of the vehicle when large torque is input to the transmission, the maximum torque transmitting capacities of the friction clutches can be reduced by coupling both of the first friction clutch and the second friction clutch and transmitting torque from both of the friction clutches to the first speed level of the speed-changing gear mechanism.

Moreover, the first friction clutch and the second friction clutch are coupled without sliding; therefore, the torque transmitting efficiency of the transmission is not deteriorated, and excessive wear and damage of clutch plates can be prevented.

Moreover, the timing of coupling of the first friction clutch and the second friction clutch is mutually shifted; therefore, a half clutch effect can be obtained.

Furthermore, the speed-changing gear mechanism achieves the first speed level by connecting both of the first input shaft and the second input shaft; therefore, the first speed level can be shifted to any of the second speed level at which it is connected to the first input shaft and the third speed level at which it is connected to the second input shaft.

### Brief Description of Drawings

FIGs. 1A and 1B show explanatory drawings showing outlines of an embodiment of a dual-clutch-type vehicle transmission according to the present invention;
FIGs. 2A and 2B show explanatory drawings showing switching of motive-power transmitting paths of the transmission of FIGs. 1A and 1B from a first speed level to a second speed level;
FIGs. 3A and 3B show explanatory drawings showing switching of the motive-power transmitting paths of the transmission of FIGs. 1A and 1B from the second speed level to a third speed level;
FIGs. 4A and 4B show explanatory drawings showing switching of the motive-power transmitting paths of the transmission of FIGs. 1A and 1B from the first speed level to the third speed level;
FIG. 5 shows an explanatory drawing showing actuation states of clutches upon switching of the speed changing levels of the transmission of FIGs. 1A and 1B;
FIGs. 6A and 6B show explanatory drawings showing outlines of another embodiment of a dual-clutch-type vehicle transmission according to the present invention;
FIGs. 7A and 7B show explanatory drawings showing switching of motive-power transmitting paths of the transmission of FIGs. 6A and 6B from a first speed level to a second speed level;
FIGs. 8A and 8B show explanatory drawings showing switching of the motive-power transmitting paths from the transmission of FIGs. 6A and 6B from the second speed level to a third speed level;
FIGs. 9A and 9B show explanatory drawings showing switching of the motive-power transmitting paths of the transmission of FIGs. 6A and 6B from the first speed level to the third speed level;
FIGs. 10A and 10B show explanatory drawings showing switching of the motive-power transmitting paths of the transmission of FIGs. 6A and 6B from the third speed level to a fourth speed level;
FIGs. 11A and 11B show explanatory drawings showing switching of the motive-power transmitting paths of the transmission of FIGs. 6A and 6B from the fourth speed level to a fifth speed level;
FIGs. 12A and 12B show explanatory drawings showing switching of the motive-power transmitting paths of the transmission of FIGs. 6A and 6B from the fifth speed level to a sixth speed level;
FIGs. 13A and 13B show explanatory drawings showing switching of the motive-power transmitting paths of the transmission of FIGs. 6A and 6B from the fourth speed level to the sixth speed level;
FIG. 14 shows an explanatory drawing showing switching states of clutches in each of the speed changing levels of the transmission of FIGs. 6A and 6B;
FIGs. 15A and 15B show explanatory drawings showing outlines of another embodiment of a dual-clutch-type vehicle transmission according to the present invention;
FIGs. 16A and 16B show explanatory drawing showing switching of motive-power transmitting paths of the transmission of FIGs. 15A and 15B from a first speed level to a second speed level;
FIGs. 17A and 17B show explanatory drawings showing switching of the motive-power transmitting paths of the transmission of FIGs. 15A and 15B from the second speed level to a third speed level;
FIGs. 18A and 18B show explanatory drawings showing switching of the motive-power transmitting paths of the transmission of FIGs. 15A and 15B from the first speed level to the third speed level;
FIGs. 19A and 19B show explanatory drawings showing switching of the motive-power transmitting paths of the transmission of FIGs. 15A and 15B from the third speed level to a fourth speed level;
FIGs. 20A and 20B show explanatory drawings showing switching of the motive-power transmitting paths of the transmission of FIGs. 15A and 15B from the third speed level to the fourth speed level;
FIGs. 21A and 21B show explanatory drawings showing switching of the transmission of FIGs. 15A and 15B from the fourth speed level to a fifth speed level;
FIGs. 22A and 22B show explanatory drawings showing switching of the transmission of FIGs. 15A and 15B from the fifth speed level to a sixth speed level;
FIGs. 23A and 23B show explanatory drawings showing switching of the transmission of FIGs. 15A and 15B from the fourth speed level to the sixth speed level; and
FIG. 24 shows an explanatory drawing showing switching states of clutches in each of speed changing levels of the transmission of FIGs. 15A and 15B.

### Best Mode for Carrying Out the Invention

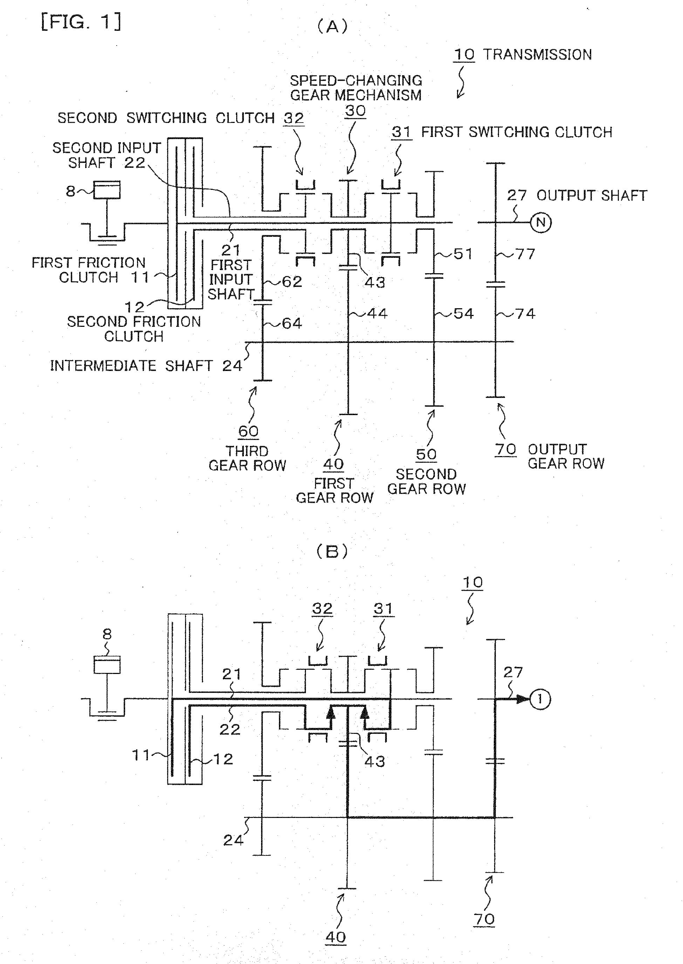

Hereinafter, a dual-clutch-type vehicle transmission of the present invention will be explained based on drawings showing outlines of an embodiment. FIGs. 1A and 1B show explanatory drawings showing the outlines of the embodiment of the dual-clutch-type vehicle transmission according to the present invention; wherein, FIG. 1A shows a state in which a speed changing level is neutral before a vehicle starts moving, and FIG. 1B shows a state of a first speed level when the vehicle starts moving. In the present embodiment, the speed changing levels of the transmission has three forward levels, and the backward level(s) thereof is omitted.

In FIG. 1A, in the transmission (dual-clutch-type vehicle transmission) 10, a first input shaft 21 and a second input shaft 22 are coaxially provided, and an intermediate shaft 24 is provided parallel to the first input shaft 21 and the second input shaft 22.

Motive power from a motive-power source 8 is input to the first input shaft 21 via a first friction clutch 11, the motive power from the motive-power source 8 is input to the second input shaft 22 via a second friction clutch 12, and speed-changedmotive power is output from an output shaft 27 via the intermediate shaft 24.

A first input gear (shared gear) 43 is rotatably provided at the first input shaft 21, and the first input gear 43 is connected/disconnected to/from the first input shaft 21 by a first switching clutch 31 and is connected/disconnected to/from the second input shaft 22 by a second switching clutch 32.

In the present embodiment, the first friction clutch 11 and the second friction clutch 12 are dry-type single plate clutches, but may employ a differenttypesuchaswet-typemulti-plateclutches. The first switching clutch 31 and the second switching clutch 32 are engagement clutches provided with general synchronization mechanisms, but may employ a different type.

A first intermediate gear 44, a second intermediate gear 54, a third intermediate gear 64, and a fourth intermediate gear 74 are fixedly provided at the intermediate shaft 24 to constitute a first gear row 40, in which the first input gear 43 and the first intermediate gear 44 are engaged with each other, a second gear row 50, in which a second input gear 51 and the second intermediate gear 54 are engaged with each other, and a third gear row 60, in which a third input gear 62 and the third intermediate gear 64 are engaged with each other.

A speed-changing gear mechanism 30 functions when the first switching clutch 31 and the second switching clutch 32 select and connect these gear rows to transmit the motive power undergone speed changing to a first speed level by the first gear row 40, a second speed level by the second gear row 50, and a third speed level by the third gear row 60 to the intermediate shaft 24.

Furthermore, a fourth intermediate gear 74 fixed to the intermediate shaft 24 and an output gear 77 fixed to the output shaft 27 are engaged with each other to constitute an output gear row 70 and transmit the motive power from the speed-changing gear mechanism 30 to the output shaft 27.

In FIG. 1A, the first switching clutch 31 and the second switching clutch 32 are not connected to any of the input gears (43, 51, 62), and the transmission 10 is in a neutral state. Moreover, both of the first friction clutch 11 and the second friction clutch 12 are released, and the motive power from the motive-power source 8 is not transmitted to the first input shaft 21 and the second input shaft 22.

Upon start of moving of the vehicle, in this state, first, the first input shaft 21 and the first input gear 43 are connected to each other by the first switching clutch 31, the second input shaft 22 and the first input gear 43 are connected to each other by the second switching clutch 32 to obtain the state of the first speed level in which the first gear row 40 is selected; and, then, both of the first friction clutch 11 and the second friction clutch 12 are coupled.

In FIG. 1B, the first switching clutch 31 and the second switching clutch 32 select the first gear row 40, and the first friction clutch 11 and the second friction clutch 12 are coupled. Motive-power transmitting paths from the first friction clutch 11 and the second friction clutch 12 to the output shaft 27 are shown by bold lines and arrows. Note that, also in the following drawings, motive-power transmitting paths are shown by bold lines and arrows.

Herein, the motive power from the motive-power source 8 transmitted through a path via the first friction clutch 11, the first input shaft 21, and the first switching clutch 31 and a path via the second friction clutch 12, the second input shaft 22, and the second switching clutch 32 is merged by the first input gear 43, is subjected to speed-change to the first speed level by the first gear row 40, and is output from the output shaft 27 via the intermediate shaft 24 and the output gear row 70.

The coupling of the first friction clutch 11 and the second friction clutch 12 upon start of moving of the vehicle is basically carried out at the same time by a maximum value of a torque transmitting capacity. However, if driving wheels slip due to, for example, the state of a road surface on which the vehicle is running, the torque transmitting capacity can be arbitrarily reduced, and slippage of the driving wheels can be avoided by practically making an adjustment within a range from a zero value of the torque transmitting capacity to the maximum value.

After either one of the first friction clutch 11 and the second friction clutch 12 is coupled, the other one may be coupled. In that case, either one of a method in which, after coupling of the friction clutch that has started coupling first is completed, coupling of the other friction clutch is started and a method in which, before coupling of the friction clutch that has started coupling first is completed, coupling of the other friction clutch is started can be employed.

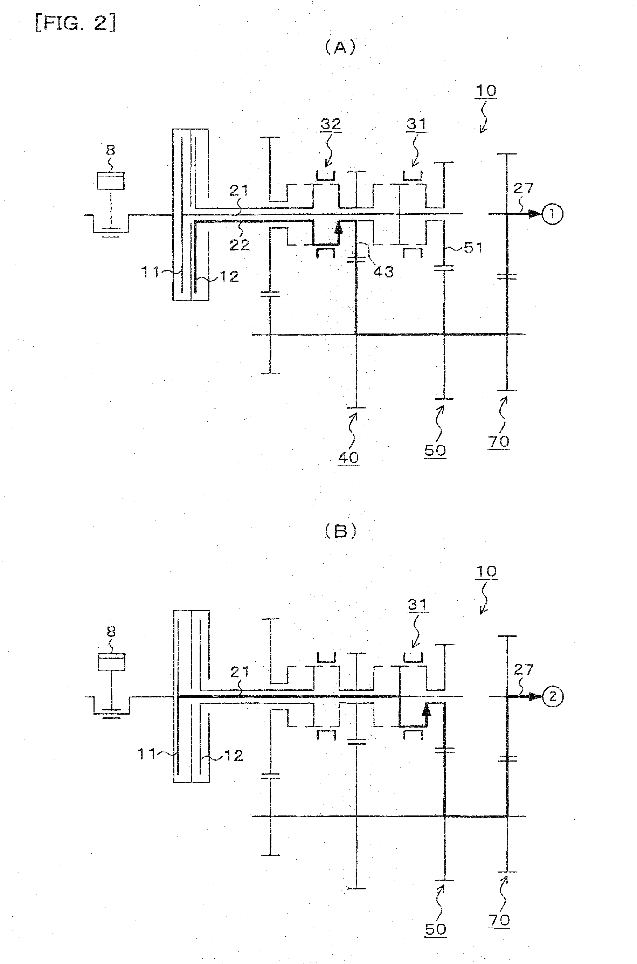

FIGs. 2A and 2B show explanatory drawings showing switching of the motive-power transmitting paths of the transmission 10 of FIGs. 1A and 1B from the first speed level to the second speed level. FIG. 2A shows a state during switching from the first speed level to the second speed level, and FIG. 2B shows a state in which switching to the second speed level has been completed.

In FIG. 2A, the transmission 10 releases the first friction clutch 11 so as to obtain a state in which no torque acts on the first switching clutch 31 and is switching the connection of the first switching clutch 31 with the first input shaft 21 from the first input gear 43 to the second input gear 51. Therefore, the first switching clutch 31 is in a state in which the second gear row 50 is selected.

At this point, the second friction clutch 12 is still coupled. Therefore, the motive power from the motive-power source 8 is transmitted to the output shaft 27 via the second input shaft 22, the second switching clutch 32, the first gear row 40, and the output gear row 70. Then, when coupling of the first friction clutch 11 and releasing of the second friction clutch 12 are carried out at the same time, it is switched to the second speed level using intermediation of the second gear row 50.

In FIG. 2B, the first friction clutch 11 is coupled, and the second friction clutch 12 is released. Therefore, the motive power from the motive-power source 8 is transmitted to the output shaft 27 via the first input shaft 21, the first switching clutch 31, the second gear row 50, and the output gear row 70.

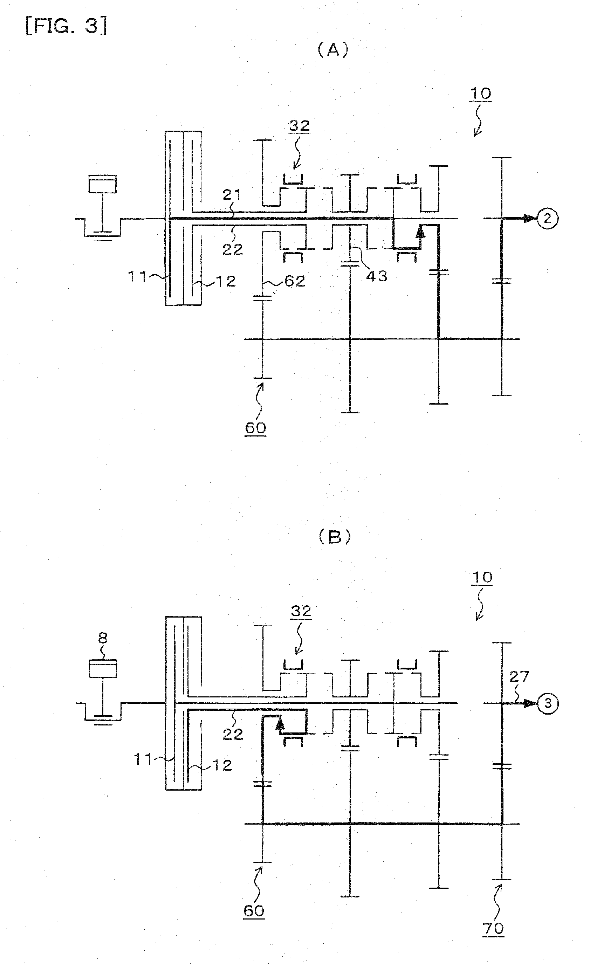

FIGs. 3A and 3B show explanatory drawings showing switching of the motive-power transmitting paths of the transmission 10 of FIGs. 1A and 1B from the second speed level to the third speed level. FIG. 3A shows a state during switching from the second speed level to the third speed level, and FIG. 3B shows a state in which switching to the third speed level has been completed.

In FIG. 3A, the transmission 10 is in a state in which no torque acts on the second switching clutch 32 since the second friction clutch 12 is released, and the transmission 10 is switching the connection of the second switching clutch 32 with the second input shaft 22 from the first input gear 43 to the third input gear 62.

Therefore, the second switching clutch 32 is in a state in which the third gear row 60 is selected. Then, when releasing of the first friction clutch 11 and coupling of the second friction clutch 12 are carried out at the same time, it is switched to the third speed level using intermediation of the third gear row 60.

In FIG. 3B, the first friction clutch 11 is released, and the second friction clutch 12 is coupled; therefore, the motive power from the motive-power source 8 is transmitted to the output shaft 27 via the second input shaft 22, the second switching clutch 32, and the third gear row 60.

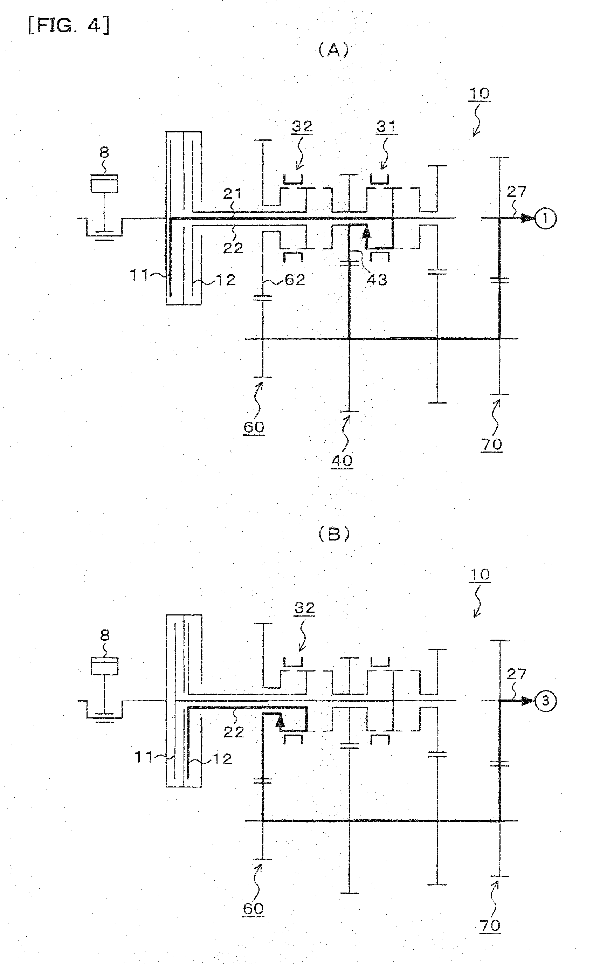

FIGs. 4A and 4B show explanatory drawings showing switching of the motive-power transmitting paths of the transmission 10 of FIGs. 1A and 1B from the first speed level to the third speed level. FIG. 4A shows a state during switching from the first speed level to the third speed level, and FIG. 4B shows a state in which switching to the third speed level has been completed.

In FIG. 4A, the transmission 10 releases the second friction clutch 12 so as to obtain a state in which no torque acts on the second switching clutch 32 and is switching the connection of the second switching clutch 32 with the second input shaft 22 from the first input gear 43 to the third input gear 62. Therefore, the second switching clutch 32 is in a state in which the third gear row 60 is selected.

At this point, the first friction clutch 11 is still coupled. Therefore, the motive power from the engine 8 is transmitted to the output shaft 27 via the first input shaft 21, the first switching clutch 31, the first gear row 40, and the output gear row 70. Then, when releasing of the first friction clutch 11 and coupling of the second friction clutch 12 are carried out at the same time, it is switched to the third speed level using intermediation of the third gear row 60.

In FIG. 4B, the first friction clutch 11 is released, and the second friction clutch 12 is coupled; therefore, the motive power from the motive-power source 8 is transmitted to the output shaft 27 via the second input shaft 22, the second switching clutch 32, the third gear row 60, and the output gear row 70.

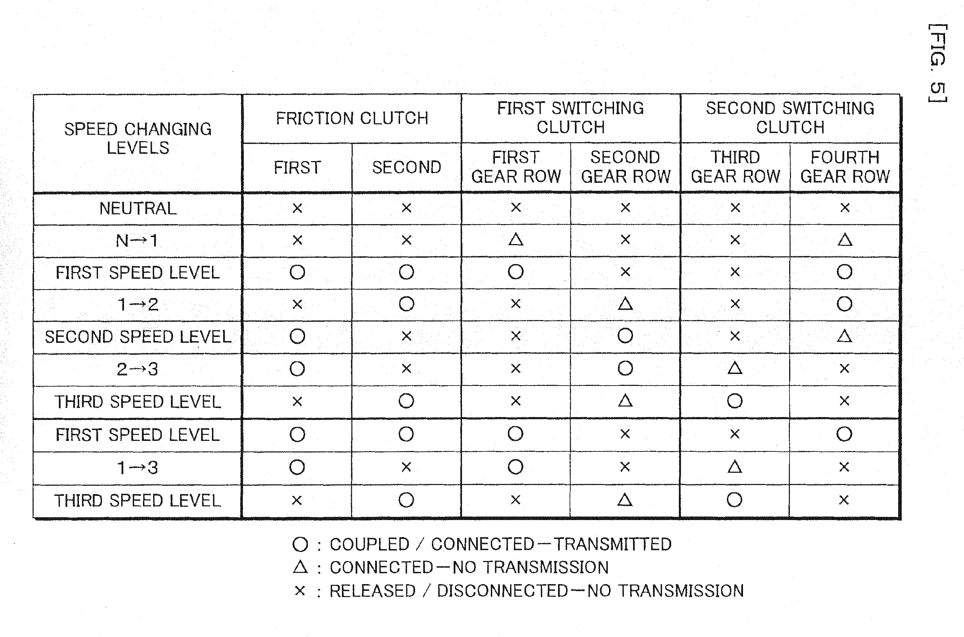

FIG. 5 is an explanatory drawing showing the actuation states of the clutches upon transmission level switching of the transmission 10 of FIGS. 1A and 1B and is showing the actuation states of the clutches of the transmission 10 in the transmission levels and during switching shown in FIGs. 1A and 1B to FIGs. 4A and 4B.

Herein, marks O represent a state in which the friction/switching clutch is coupled/connected to transmit torque, marks Δ represent a state in which the switching clutch is connected but is not transmitting torque, and marks X represent a state in which the friction/switching clutch is released/disconnected and is not transmitting torque.

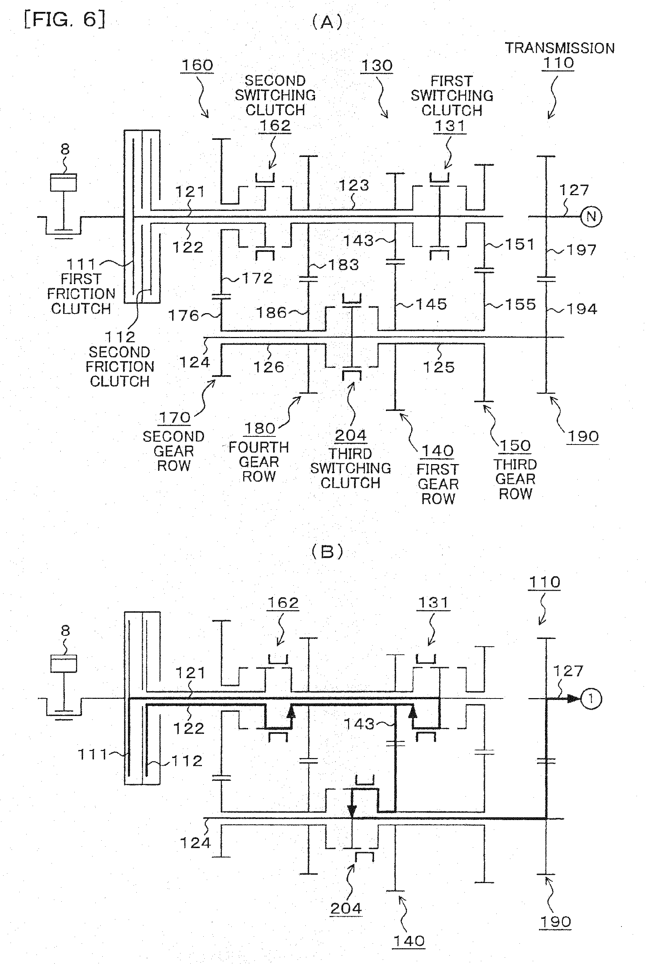

FIGs. 6A and 6B show explanatory drawings showing outlines of another embodiment of a dual-clutch-type vehicle transmission according to the present invention. FIG. 6A shows a state in which a speed changing level is neutral before a vehicle starts moving, and FIG. 6B shows a state of a first speed level when the vehicle starts moving. In the present embodiment, the speed changing levels of the transmission have forward six levels, and a backward level(s) is omitted.

In FIG. 6A, in a transmission (dual-clutch-type vehicle transmission) 110, a first input shaft 121 and a second input shaft 122 are coaxially provided, and an intermediate shaft 124 is provided parallel to the first input shaft 121 and the second input shaft 122.

Motive power from the motive-power source 8 is input to the first input shaft 121 via a first friction clutch 111, the motive power from the motive-power source 8 is input to the second input shaft 122 via a second friction clutch 112, and speed-changed motive power is output from an output shaft 127 via the intermediate shaft 124.

A first input gear 143 and a third input gear 151 are rotatably provided at the first input shaft 121 and are connected/disconnected to/from the first input shaft 121 by a first switching clutch 131, and a second input gear 172 and a fourth input gear 183 are rotatably provided at the second input shaft 122 and are connected/disconnected to/from the second input shaft 122 by a second switching clutch 162. The first input gear 143 and the fourth input gear 183 are coupled by a first shared shaft 123 and are integrally rotated as a shared gear.

A first intermediate gear 145 and a third intermediate gear 155, which are coupled by a second shared shaft 125 and integrally rotated, and a second intermediate gear 176 and a fourth intermediate gear 186, which are coupled by a third shared shaft 126 and integrally rotated, are rotatably provided at the intermediate shaft 124 and are connected/disconnected to/from the intermediate shaft 124 by a third switching clutch 204.

Herein, a first gear row 140, in which the first input gear 143 and the first intermediate gear 145 are engaged with each other; a third gear row 150, in which the third input gear 151 and the third intermediate gear 155 are engaged with each other; and the first switching clutch 131 constitutes a first speed-changing gear mechanism 130. A second gear row 170, in which the second input gear 172 and the second intermediate gear 176 are engaged with each other; a fourth gear row 180, in which the fourth input gear 183 and the fourth intermediate gear 186 are engaged with each other; and the second switching clutch 162 constitutes a second speed-changing gear mechanism 160.

A fifth intermediate gear 194 fixed to the intermediate shaft 124 and an output gear 197 fixed to the output shaft 127 are engaged with each other to constitute an output gear row 190 and transmits the motive power from the first speed-changing gear mechanism 130 or the second speed-changing gear mechanism 160, which is selected by the third switching clutch 204, to the output shaft 127.

In FIG. 6A, the first switching clutch 131 and the second switching clutch 162 are not connected to any of the input gears (143, 151, 172, 183), and the transmission 110 is in a neutral state. Both of the first friction clutch 111 and the second friction clutch 112 are released, and the motive power from the motive-power source 8 is not transmitted to the first input shaft 121 and the second input shaft 122.

Upon start of moving of the vehicle, in this state, first, the first input shaft 121 and the first input gear 143 are connected to each other by the first switching clutch 131, and the second input shaft 122 and the third input gear 183 are connected to each other by the second switching clutch 162 so as to obtain the state of the first speed level in which the first gear row 140 is selected. Then, both of the first friction clutch 111 and the second friction clutch 112 are coupled.

In FIG. 6B, the first switching clutch 131 selects the first gear row 140, the second switching clutch 162 selects the fourth gear row 180, the third switching clutch 204 selects a low-speed level, and the first friction clutch 111 and the second friction clutch 112 are coupled.

Herein, the motive power from the motive-power source 8 transmitted by a path via the first friction clutch 111, the first input shaft 121, and the first switching clutch 131 and a path via the second friction clutch 112, the second input shaft 122, and the second switching clutch 162 is merged by the first input gear 143, is subjected to speed-change to the first speed level by the first gear row 140, and is output from the output shaft 127 via the intermediate shaft 124 and the output gear row 190.

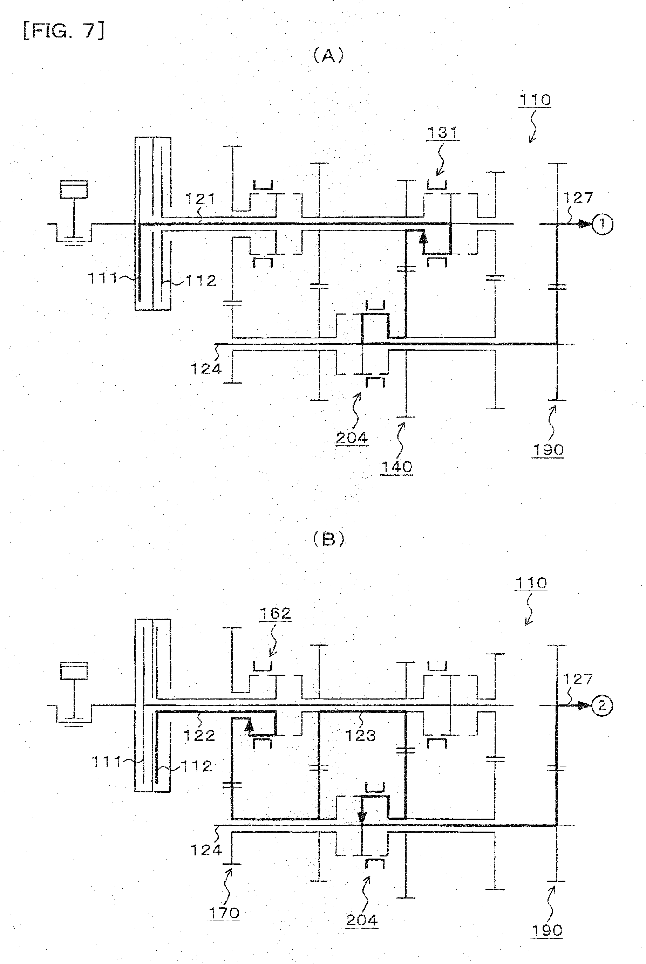

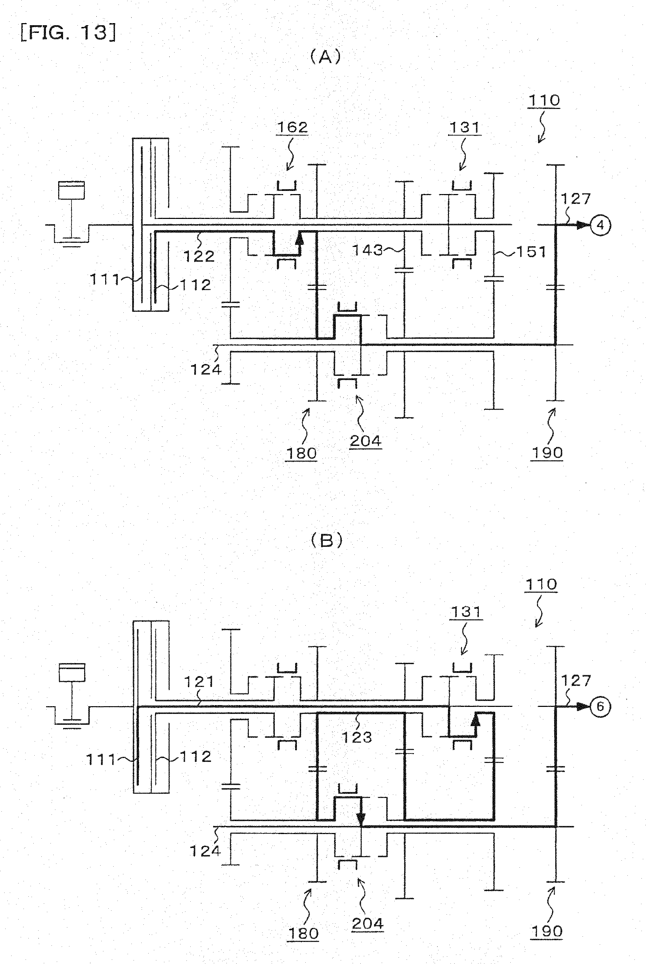

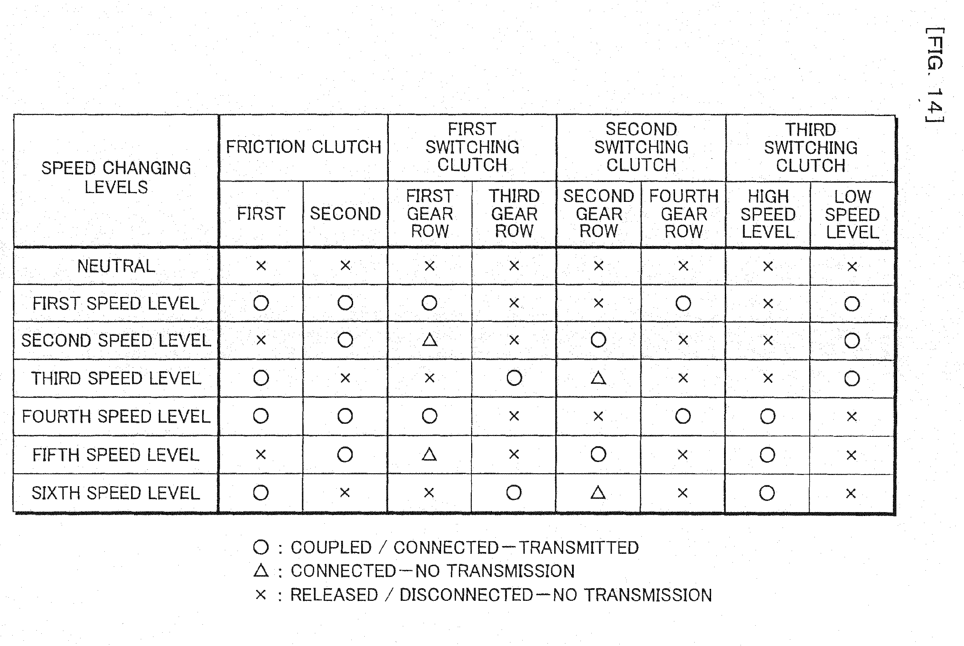

The switching of the motive-power transmitting paths of the transmission 110 shown in FIGs. 6A and 6B to the levels higher than the first speed level is shown in FIGs. 7A and 7B to FIGs. 13A and 13B as described below, and the actuation states of the friction clutches and the switching clutches in neutral and the six speed levels in those cases are shown in FIG. 14.

The switching operation of the transmission 110 from the first speed level to the third speed level is basically the same as that of the embodiment shown in FIGs. 1A and 1B to FIG. 5; and the speed change from the first speed level to the third speed level and the speed change from the fourth speed level to the sixth speed level are the same actuation except the points that the third switching clutch 204 selects a low speed level in the former one and selects a high speed level in the latter one; therefore, detailed explanations will be omitted.

FIGs. 7A and 7B show explanatory drawings showing switching of motive-power transmitting paths of the transmission 110 of FIGs. 6A and 6B from the first speed level to the second speed level. FIG. 7A shows a state during switching from the first speed level to the second speed level, and FIG. 7B shows a state in which switching to the second speed level has been completed.

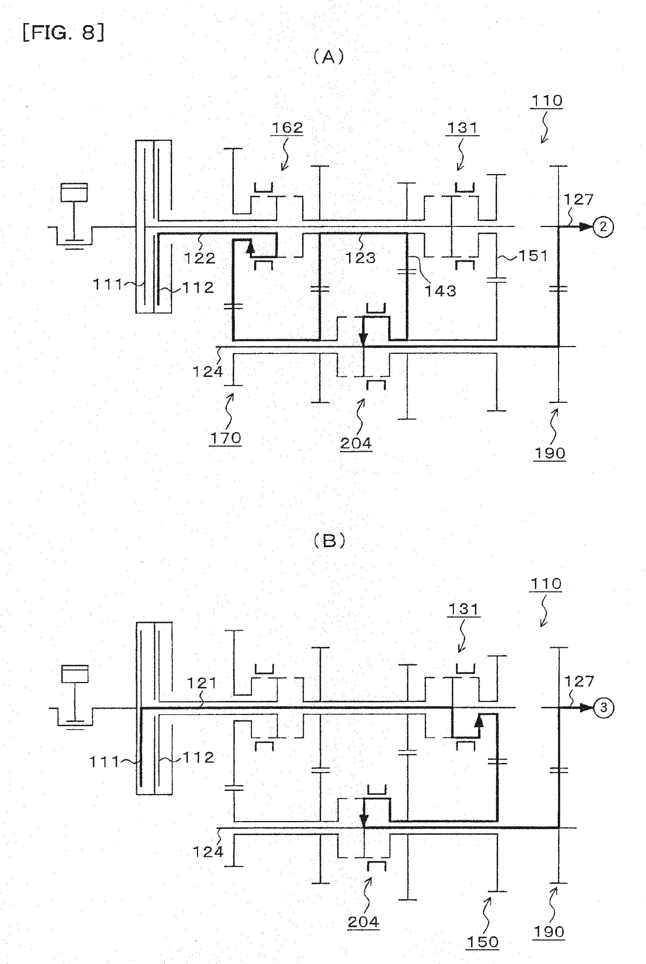

FIGs. 8A and 8B show explanatory drawings showing switching of the motive-power transmitting paths of the transmission 110 of FIGs. 6A and 6B from the second speed level to the third speed level. FIG. 8A shows a state during switching from the second speed level to the third speed level, and FIG. 8B shows a state in which switching to the third speed level has been completed.

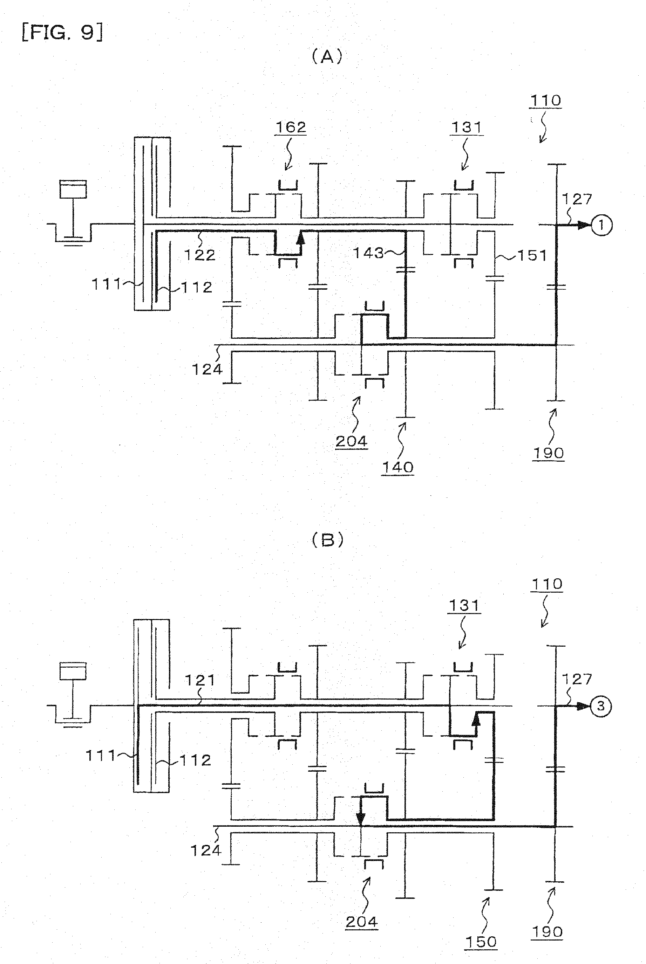

FIGs. 9A and 9B show explanatory drawings showing switching of the motive-power transmitting paths of the transmission 110 of FIGs. 6A and 6B from the first speed level to the third speed level. FIG. 9A shows a state during switching from the first speed level to the third speed level, and FIG. 9B shows a state in which switching to the third speed level has been completed.

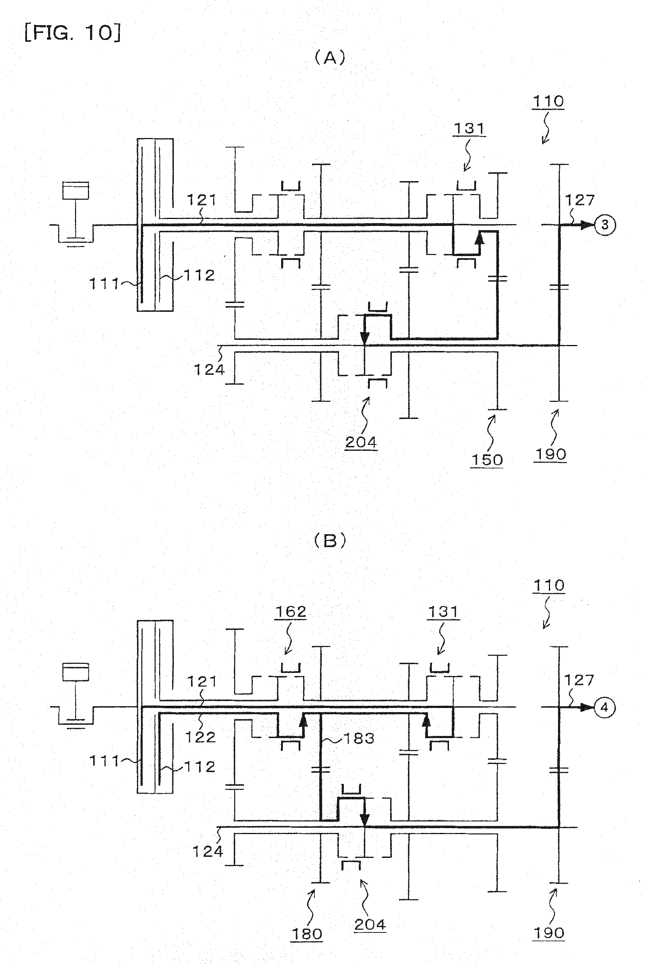

FIGs. 10A and 10B show explanatory drawings showing switching of the motive-power transmitting paths of the transmission 110 of FIGs. 6A and 6B from the third speed level to the fourth speed level. FIG. 10A shows a state during switching from the third speed level to the fourth speed level, and FIG. 10B shows a state in which switching to the fourth speed level has been completed.

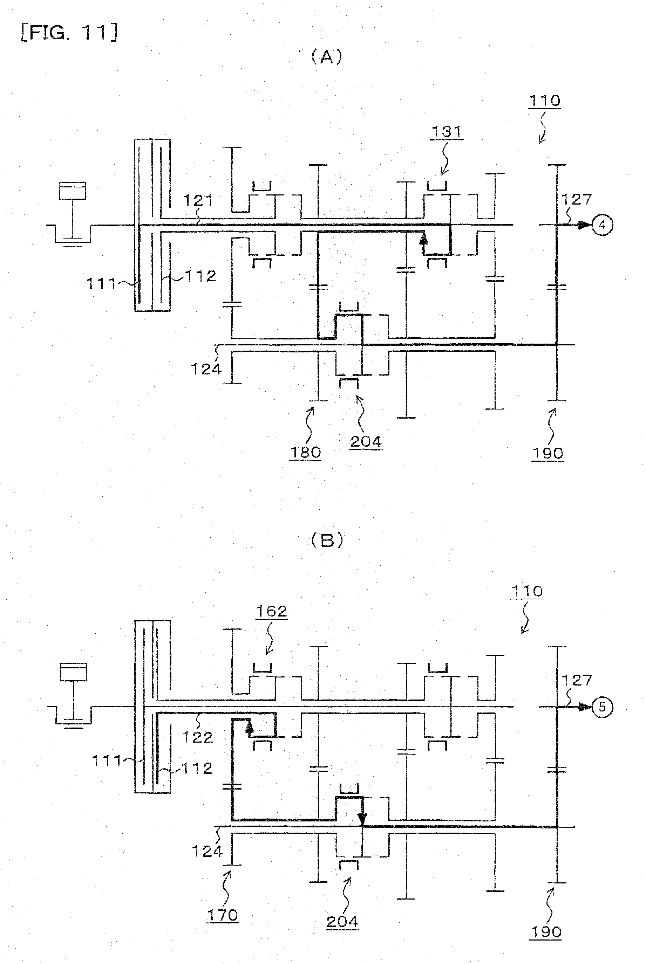

FIGs. 11A and 11B show explanatory drawing showing switching of the motive-power transmitting paths of the transmission 110 of FIGs. 6A and 6B from the fourth speed level to the fifth speed level. FIG. 11A shows a state during switching from the fourth speed level to the fifth speed level, and FIG. 11B shows a state in which switching to the fifth speed level has been completed.

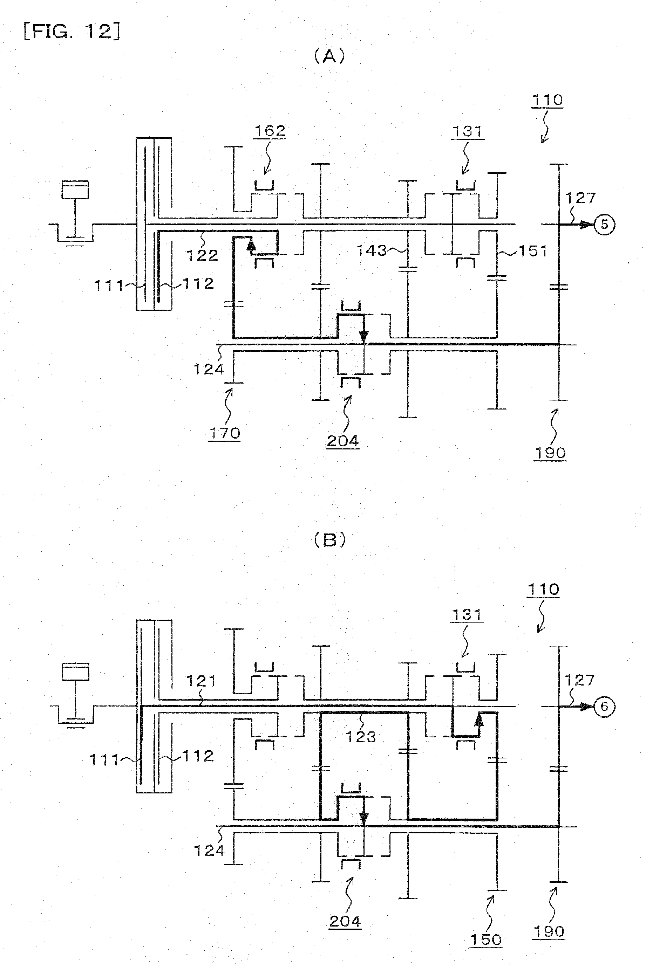

FIGs. 12A and 12B show explanatory drawings showing switching of the motive-power transmitting paths of the transmission 110 of FIGs. 6A and 6B from the fifth speed level to the sixth speed level. FIG. 12A shows a state during switching from the fifth speed level to the sixth speed level, and FIG. 12B shows a state in which switching to the sixth speed level has been completed.

FIGs. 13A and 13B show explanatory drawings showing switching of the motive-power transmitting paths of the transmission 110 of FIGs. 6A and 6B from the fourth speed level to the sixth speed level. FIG. 13A shows a state during switching from the fourth speed level to the sixth speed level, and FIG. 13B shows a state in which switching to the sixth speed level has been completed.

FIG. 14 shows an explanatory drawing showing actuation states of the clutches upon switching of speed changing levels of the transmission 110 of FIGs. 6A and 6B and is showing the actuation states of the clutches of the speed changing levels of the transmission 110 shown in FIGs. 6A and 6B to FIGs. 13A and 13B.

Herein, marks O represent a state in which the friction/switching clutch is coupled/connected to transmit torque, marks Δ represent a state in which the switching clutch is connected but is not transmitting torque, and marks X represent a state in which the friction/switching clutch is released/disconnected and is not transmitting torque.

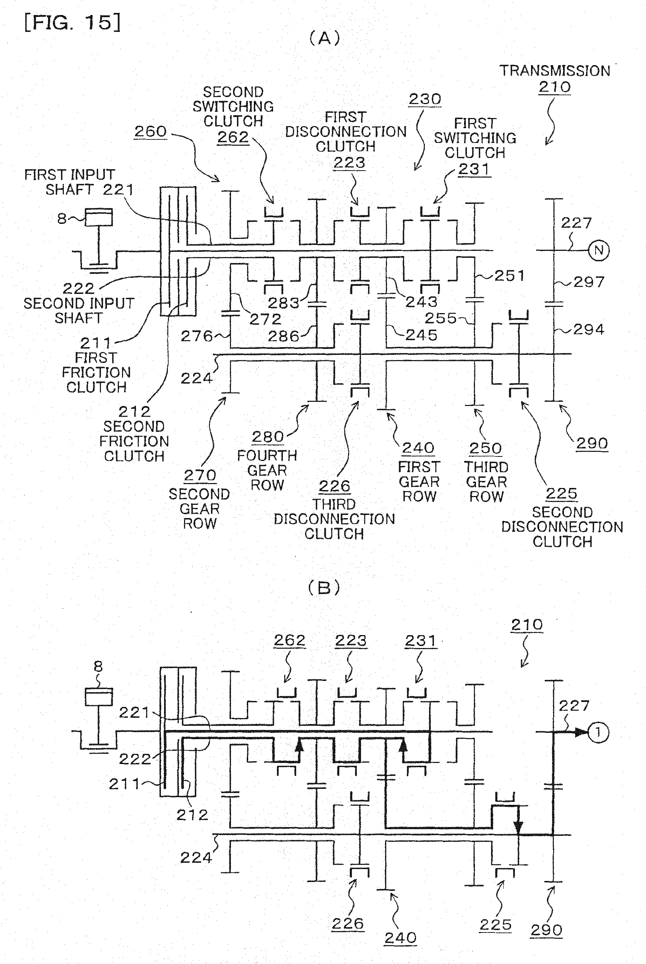

FIGs. 15A and 15B show explanatory drawings showing outlines of another embodiment of a dual-clutch-type vehicle transmission according to the present invention. FIG. 15A shows a state in which a speed changing level is neutral before a vehicle starts moving, and FIG. 15B shows a state of a first speed level when the vehicle starts moving. In the present embodiment, the speed changing levels of the transmission are forward six levels, and a backward level(s) is omitted.

In FIG. 15A, in a transmission (dual-clutch-type vehicle transmission) 210, a first input shaft 221 and a second input shaft 222 are coaxially provided, and an intermediate shaft 224 is provided to be parallel to the first input shaft 221 and the second input shaft 222.

The motive power from the motive-power source 8 is input to the first input shaft 221 via a first friction clutch 211, the motive power from the motive-power source 8 is input to the second input shaft 222 via a second friction clutch 212, and speed-changed motive power is output from an output shaft 227 via the intermediate shaft 224.

A first input gear 243 and a third input gear 251 are rotatably provided at the first input shaft 221 and are connected/disconnected to/from the first input shaft 221 by a first switching clutch 231, and a second input gear 272 and a fourth input gear 283 are rotatably provided at the second input shaft 222 and are connected/disconnected to/from the second input shaft 222 by a second switching clutch 262. The first input gear 243 and the fourth input gear 283 are coupled by a first disconnection/connection clutch 223 and are integrally rotated as a shared gear.

A first intermediate gear 245 and a third intermediate gear 255, which are coupled by a disconnection/connection clutch 225 and integrally rotated, and a second intermediate gear 276 and a fourth intermediate gear 286, which are coupled by a third disconnection/connection clutch 226 and integrally rotated, are rotatably provided at the intermediate shaft 224; and the intermediate shaft 224 is connected/disconnected by the second disconnection/connection clutch 225 and the third disconnection/connection clutch 226.

Herein, a first gear row 240, in which the first input gear 243 and the first intermediate gear 245 are engaged with each other; a third gear row 250, in which the third input gear 251 and the third intermediate gear 255 are engaged with each other; and the first switching clutch 231 constitute a first speed-changing gear mechanism 230. A second gear row 270, in which the second input gear 272 and the second intermediate gear 276 are engaged with each other; a fourth gear row 280, in which the fourth input gear 283 and the fourth intermediate gear 286 are engaged with each other; and the second switching clutch 262 constitute a second speed-changing gear mechanism 260.

A fifth intermediate gear 294 fixed to the intermediate shaft 224 and an output gear 297 fixed to the output shaft 227 are engaged with each other to constitute an output gear row 290 and transmit the motive power from the first speed-changing gear mechanism 230 or the second speed-changing gear mechanism 260 selected by the second disconnection/connection clutch 225 and the third disconnection/connection clutch 226 to the output shaft 227.

In FIG. 15A, the first switching clutch 231 and the second switching clutch 262 are not connected to any of the input gears (243, 251, 272, 283), and the transmission 210 is in a neutral state. Both of the first friction clutch 211 and the second friction clutch 212 are released, and the motive power from the motive-power source 8 is not transmitted to the first input shaft 221 and the second input shaft 222.

Upon start of moving of the vehicle, in this state, first, the first input shaft 221 and the first input gear 243 are connected by the first switching clutch 231, and the second input shaft 222 and the third input gear 283 are connected by the second switching clutch 262 to obtain the state of the first speed level in which the first gear row 240 is selected. Then, both of the first friction clutch 211 and the second friction clutch 212 are coupled.

In FIG. 15B, the first switching clutch 231 selects the first gear row 240, the second switching clutch 262 selects the fourth gear row 280, the second disconnection/connection clutch 225 is connected, the third disconnection/connection clutch is disconnected (low speed level is selected), and the first friction clutch 211 and the second friction clutch 212 are coupled.

The motive power from the motive-power source 8 transmitted by a path via the first friction clutch 211, the first input shaft 221, and the first switching clutch 231 and a path via the second friction clutch 212, the second input shaft 222, and the second switching clutch 262 is merged by the first input gear 243, is subjected to speed-change to the first speed level by the first gear row 240, and is output from the output shaft 227 via the intermediate shaft 224 and the output gear row 290.

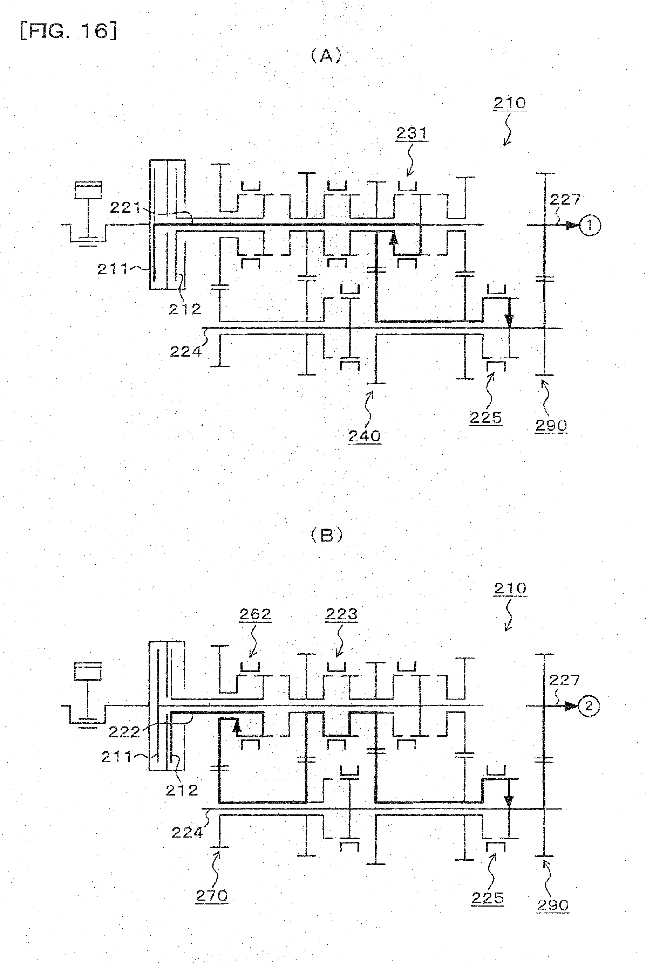

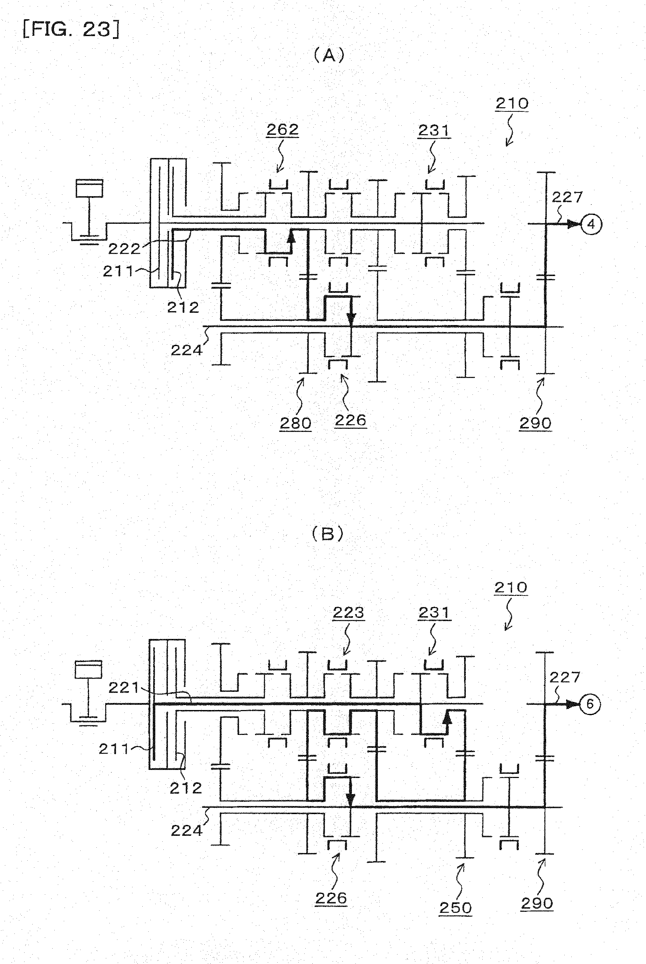

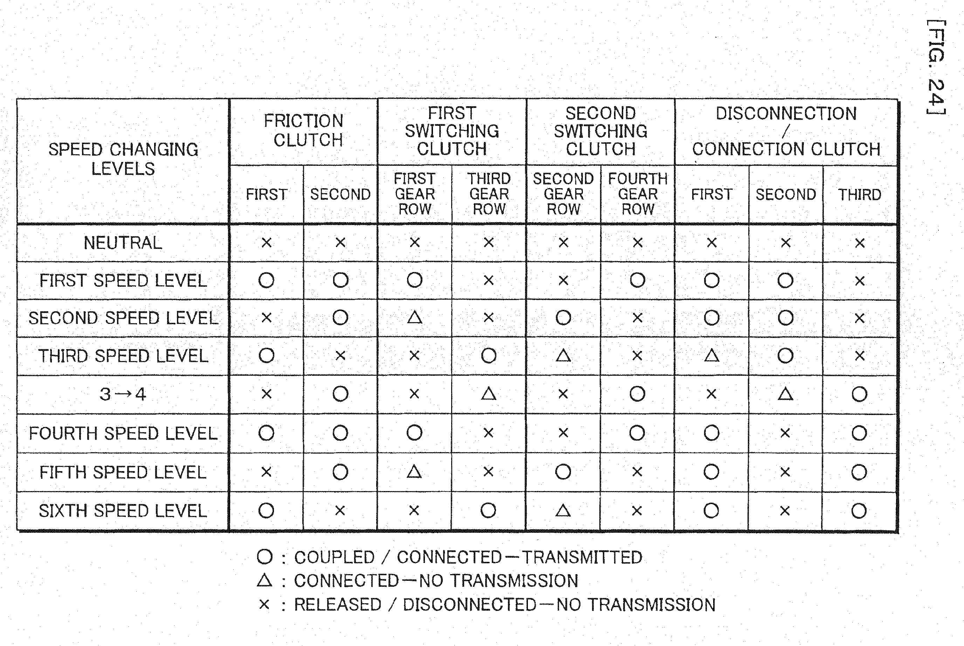

The switching of the motive-power transmitting paths of the transmission 210 shown in FIGs. 15A and 15B to the levels higher than the first speed level is shown in FIGs. 16A and 16B to FIGs. 23A and 23B as described below, and the actuation states of the friction clutches and the switching clutches in neutral and the six speed levels in those cases are shown in FIG. 24.

The switching operation of the transmission 210 from the first speed level to the third speed level is basically the same as that of the embodiment shown in FIGs. 6A and 6B to FIGs. 9A and 9B. Moreover, the speed change from the first speed level to the third speed level and the speed change from the fourth speed level to the sixth speed level are the same actuations except the points that the former one connects the second disconnection/connection clutch 225 and disconnects the third disconnection/connection clutch (select the low speed level) and the latter one disconnects the second disconnection/connection clutch 225 and connects the third disconnection/connection clutch (select the high speed level). Therefore, detailed explanations will be omitted.

FIGs. 16A and 16B show explanatory drawings showing switching of the motive-power transmitting paths of the transmission 210 of FIGs. 15A and 15B from the first speed level to the second speed level. FIG. 16A shows a state during switching from the first speed level to the second speed level, and FIG. 16B shows a state in which switching to the second speed level has been completed.

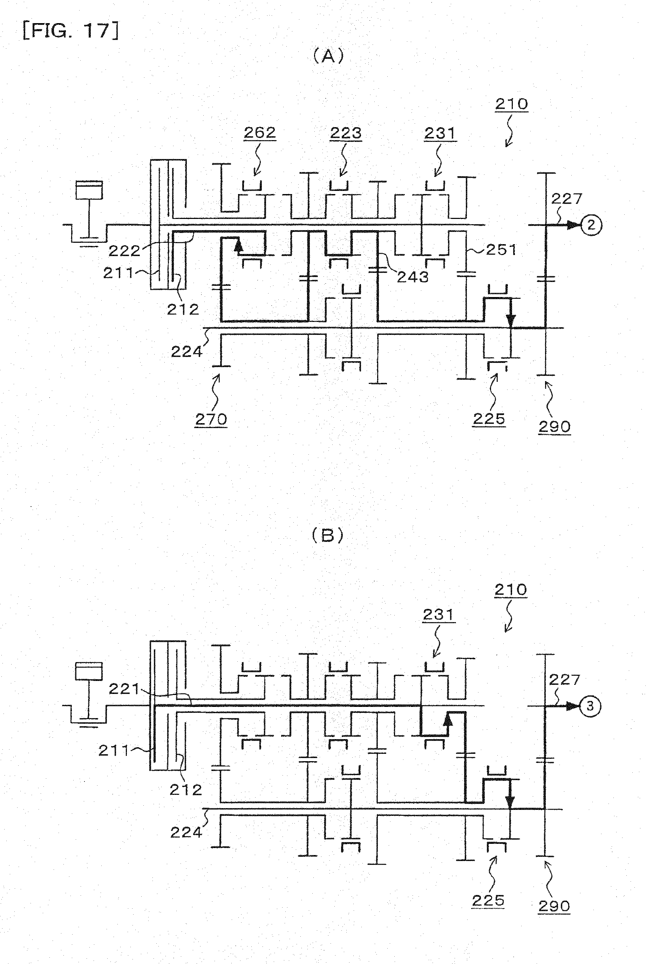

FIGs. 17A and 17B show explanatory drawings showing switching of the motive-power transmitting paths of the transmission 210 of FIGs. 15A and 15B from the second speed level to the third speed level. FIG. 17A shows a state during switching from the second speed level to the third speed level, and FIG. 17B shows a state in which switching to the third speed level has been completed.

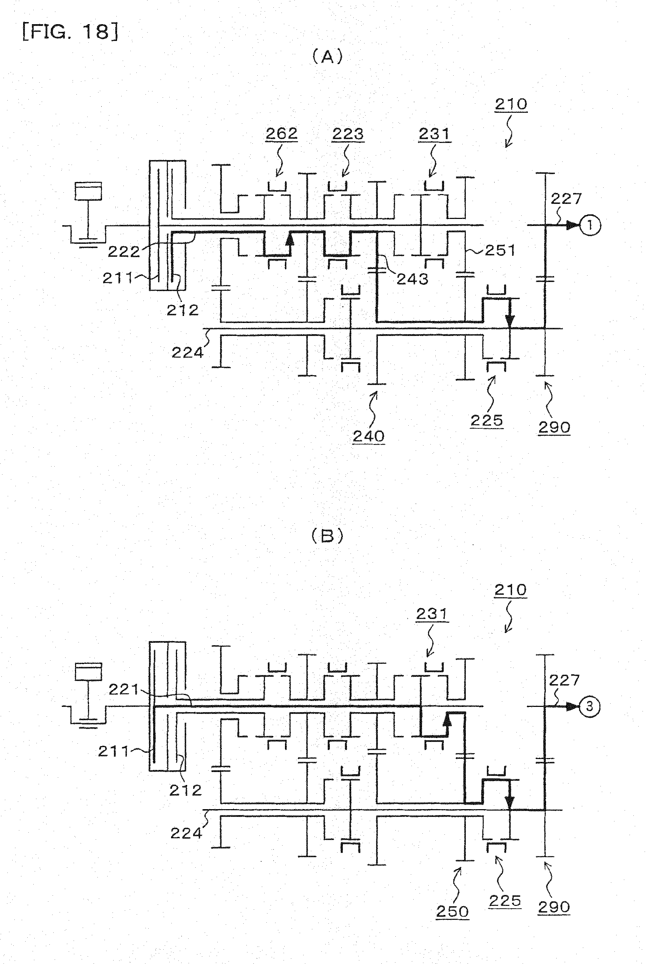

FIGs. 18A and 18B show explanatory drawings showing switching of the motive-power transmitting paths of the transmission 210 of FIGs. 15A and 15B from the first speed level to the third speed level. FIG. 18A shows a state during switching from the first speed level to the third speed level, and FIG. 18B shows a state in which switching to the third speed level has been completed.

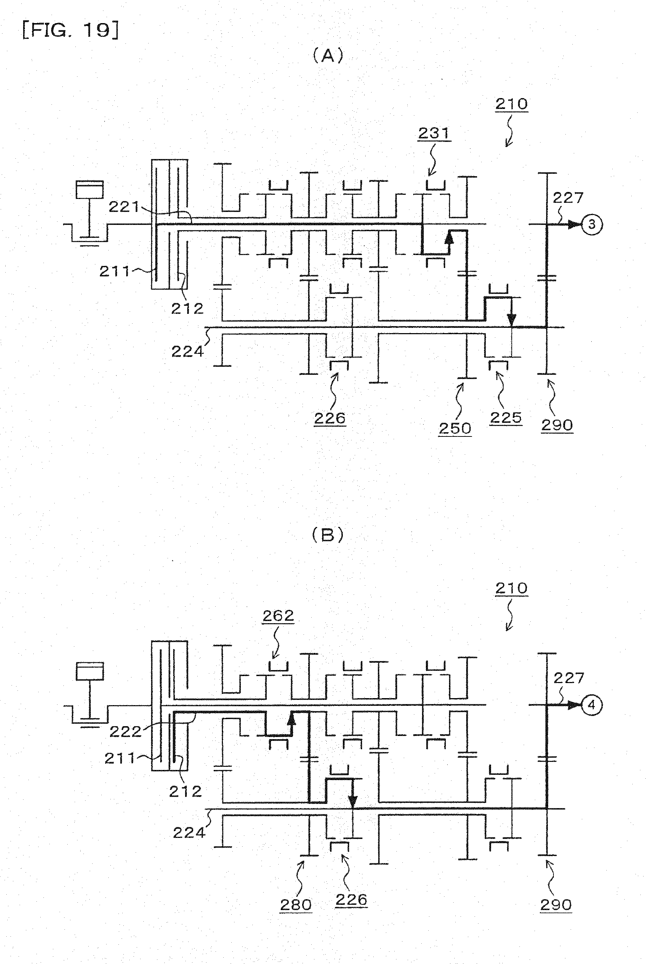

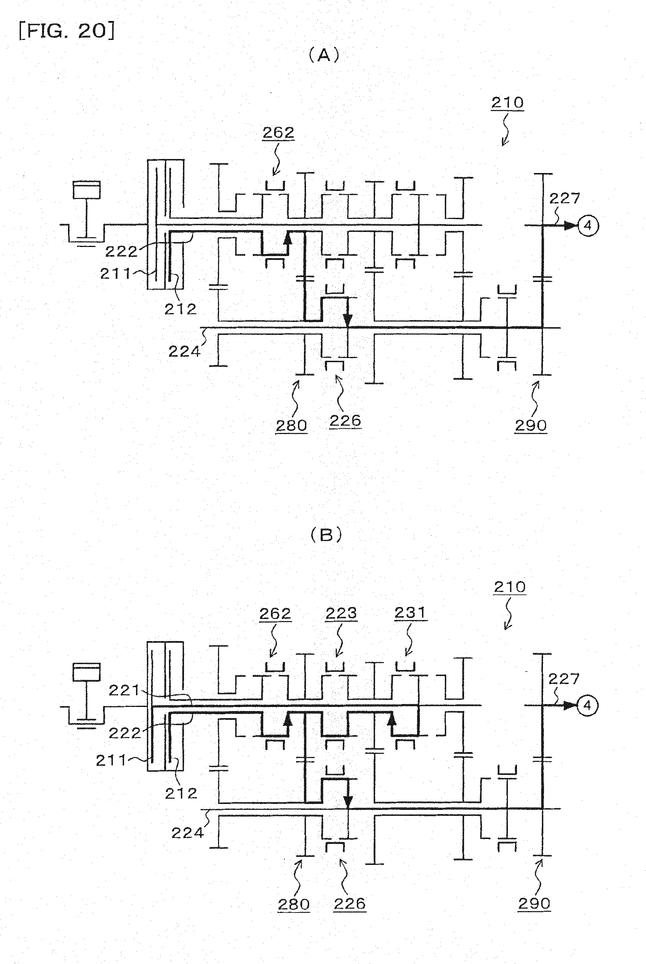

FIGs. 19A and 19B to FIGs. 20A and 20B show explanatory drawings showing switching of the motive-power transmitting paths of the transmission 210 of FIGs. 15A and 15B from the third speed level to the fourth speed level. FIG. 19A shows a state during switching from the third speed level to the fourth speed level, FIGs. 19B and 20A show a state in which the first friction clutch is released although it has been switched to the fourth speed level, and FIG. 20B shows a state in which the first friction clutch and the second friction clutch are coupled, and switching to the fourth speed level has been completed.

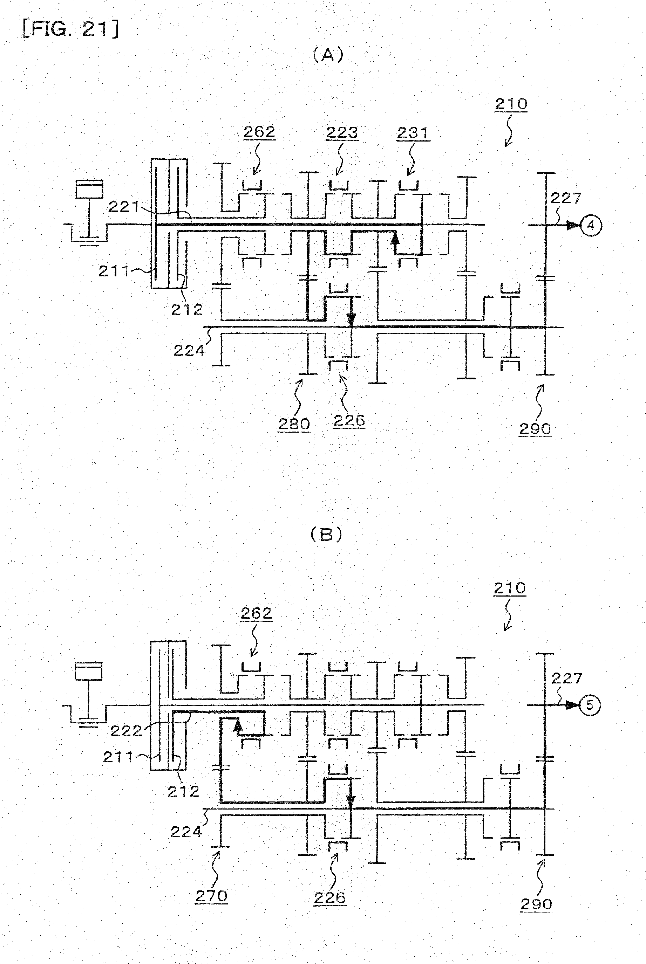

FIGs. 21A and 21B show explanatory drawings showing switching of the motive-power transmitting paths of the transmission 210 of FIGs. 15A and 15B from the fourth speed level to the fifth speed level. FIG. 21A shows a state during switching from the fourth speed level to the fifth speed level, and FIG. 21B shows a state in which switching to the fifth speed level has been completed.

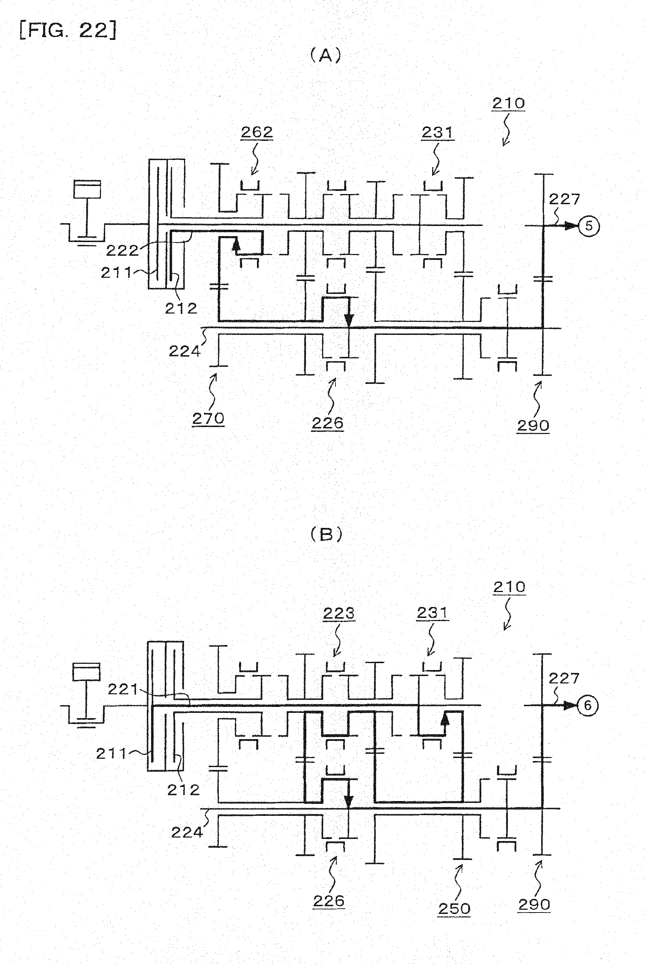

FIGs. 22A and 22B show explanatory drawings showing switching of the motive-power transmitting paths of the transmission 210 of FIGs. 15A and 15B from the fifth speed level to the sixth speed level. FIG. 22A shows a state during switching from the fifth speed level to the sixth speed level, and FIG. 22B shows a state in which switching to the sixth speed level has been completed.

FIGs. 23A and 23B show explanatory drawings showing switching of the motive-power transmitting paths of the transmission 210 of FIGs. 15A and 15B from the fourth speed level to the sixth speed level. FIG. 23A shows a state during switching from the fourth speed level to the sixth speed level, and FIG. 23B shows a state in which switching to the sixth speed level has been completed.

FIG. 24 shows an explanatory drawing showing the actuation states of the clutches upon speed-level switching of the transmission 210 of FIGs. 15A and 15B and is showing the actuation states of the clutches of the speed changing levels of the transmission 210 shown in FIGs. 15A and 15B to FIGs. 23A and 23B.

Herein, marks O represent a state in which the friction/switching/disconnection/connection clutch is coupled/connected to transmit torque, marks Δ represent a state in which the switching/disconnection/connection clutch is connected but is not transmitting torque, and marks X represent a state in which the friction/switching/disconnection/connection clutch is released/disconnected and is not transmitting torque.

In the above described embodiment, upshifts like the first speed level to the second speed level have been explained. In a downshift like speed-change from the second speed level to the first speed level, a speed changing operation can be carried out by carrying out operations opposite to the explanation of the upshift.

The explanations of the embodiments are finished above. However, the present invention is not limited to the above described embodiments, include arbitrary modifications that do not impair objects and advantages thereof, and is not limited by numerical values, etc. shown in the above described embodiments.

## Claims

1. A dual-clutch-type vehicle transmission comprising:
a first input shaft and a second input shaft;
a first friction clutch that can transmit motive power from a motive-power source to the first input shaft;
a second friction clutch that can transmit the motive power from the motive-power source to the second input shaft;
a speed-changing gear mechanism that can select any of a plurality of speed changing levels to carry out speed change by connecting/disconnecting the motive power from the first input shaft and the second input shaft; and
an output shaft that outputs the motive power from the speed-changing gear mechanism; wherein
the speed-changing gear mechanism is provided with a shared gear that can connect the first input shaft and the second input shaft at the same time.

2. The dual-clutch-type vehicle transmission according to claim 1, wherein
the shared gear is disposed to be coaxial with the first input shaft and the second input shaft.

3. The dual-clutch-type vehicle transmission according to claim 1 or 2, wherein,
upon start of moving of a vehicle, in a state that a first speed level is selected by the speed-changing gear mechanism, the first friction clutch and the second friction clutch are coupled at the same time at equal to or higher than a maximum value or an intermediate value of a torque transmitting capacity, and the motive power from the motive-power source can be transmitted to the output shaft via the first friction clutch and the second friction clutch.

4. The dual-clutch-type vehicle transmission according to claim 1 or 2, wherein,
upon start of moving of a vehicle, in a state that a first speed level is selected by the speed-changing gear mechanism, after either one of the first friction clutch and the second friction clutch is coupled, the other one is coupled, and the motive power from the motive-power source can be transmitted to the output shaft.

5. The dual-clutch-type vehicle transmission according to claim 2, wherein
the speed-changing gear mechanism has:
a plurality of gear rows that constitute the plurality of speed-changing levels;
a first switching clutch that can select any one row of the plurality of gear rows and connect to the first input shaft; and
a second switching clutch that can select any one row of the plurality of gear rows and connect to the second input shaft.

6. The dual-clutch-type vehicle transmission according to claim 5, wherein
the speed-changing gear mechanism has
a first speed-changing gear mechanism that can carry out speed change by selecting any of the plurality of speed changing levels including at least a first speed level by the first switching clutch; and
a second speed-changing gear mechanism that can carry out speed change by selecting any of the plurality of speed changing levels including at least a second speed level by the second switching clutch.

7. The dual-clutch-type vehicle transmission according to claim 6, comprising
a third switching clutch that can select any one of low speed levels including the first speed level and the second speed level and a high speed level including at least a highest speed level and transmit the motive power to the output shaft, the motive power having undergone speed change by the first speed-changing gear mechanism or the second speed-changing gear mechanism.
